# EUROPEAN PATENT APPLICATION

(11) **EP 0 986 285 A2**
(43) Date of publication of application: **15.03.2000**
(21) Application number: 99402047.7
(22) Date of filing: 12.08.1999
(51) Int. Cl.: H04Q 11/04

(54) **System and method for implementing a backup line in a telecommunication network**

(30) Priority: 10.09.1998 ES 9801911
(71) Applicant: ALCATEL, 75008 Paris (FR)
(72) Inventor: Diaz Diaz, Victor Manuel, 28803 Alcala de Henares, Madrid (ES)
(74) Representative: Feray, Valérie

(57) **Abstract**

System and method for implementing a backup line in a telecommunication network, which comprises at least one communication line (3) in a telecommunication network (4) for establishing communication between a first subscriber (1) and at least a second subscriber (2). Each subscriber is connected to an access system (7, 8) in which a mobile terminal (71) and (81) capable of establishing calls by radio to predetermined numbers is included. In the event of a fault in the communication line (3) of a subscriber, a call is made via the mobile terminal (71, 81) of said subscriber to a predetermined number, making use of a mobile network (9) for establishing a backup line (10, 11).

## Description

The present invention relates to a system and a method for implementing a backup line in a telecommunication network, which is preferentially used in the access systems to data or telephony networks.

### BACKGROUND OF THE INVENTION

In the present telecommunication networks, there exists the possibility that in the event of a fault in a communication line, use can be made of a second line, usually termed backup line, for the purpose of providing an alternative communication path and so avoid breaks in the communication.

Normally, the communication line belongs to a data network, whilst the second line belongs to another telecommunication network like, for example, an integrated services digital network (ISDN).

A backup line system for this type of communication is known from the United States patent US-A-5.406.564. According to the system proposed in this patent, a backup line provides support for a communication line in the event of a fault occurring on the latter.

The backup line in the system of the patent mentioned comprises a first and a second backup unit each one coupled to a first and a second subscriber, respectively, and to each other over channels of an integrated services digital network (ISDN). Said backup units include backup means which serve to form backup communication channels between said subscribers in the event of a fault occurring on the communication line.

According to this arrangement, the backup line, by being set up through an ISDN, makes use of cables.

In practice, both lines, that is the usual communication line and the backup line are run through cables that are physically laid in parallel and alongside or very close to each other within their network installation route.

This occurrence means that the two cables corresponding to the two lines are equally liable to suffer physical damage produced, for example, by construction work in the terrain in which both cables are laid or for other reasons, such as storms.

Consequently, once the circumstances that cause physical harm take place, said circumstances can affect both cables, leaving both the communication line and the backup line out of service.

The idea of running each cable over different paths, although supposing a solution for this problem, would imply a significant increase in the costs of cable laying and consequently would give rise to another drawback equally undesirable.

On the other hand, mention has to be made that there are telecommunication networks in which use is only made of one communication line and, consequently, said backup line is absent. This case is encountered in many developing countries where for economic reasons or lack of resources it has been decided not to lay a backup line for emergency situations.

In this type of network the main problem is that of obtaining a more economical, feasible and at the same time effective manner of installing backup lines for the purposes mentioned earlier.

### DESCRIPTION OF THE INVENTION

To overcome the problems above mentioned, the system and the method for implementing a backup line in a telecommunication network that make use of radio channels for providing a backup line are proposed.

According to the present invention, backup access is provided for the user traffic through a mobile telephone network, so that the availability of service is assured in those situations in which both the leased line or data network and the public switched telephone network (PSTN) or the ISDN are out of service.

The implementation of the backup line object of the invention consists mainly in incorporating a mobile terminal into an access system, capable of generating calls to a set of numbers previously configured by the user as backup access points.

### BRIEF DESCRIPTION OF THE DRAWINGS

Figure 1 is a block diagram in which the arrangement of the equipment and networks involved in this invention is shown.

Figure 2 is a flowchart of the process followed by the access equipment pertaining to the system of the present invention, for connecting the users over a backup line.

Figure 3 is a partial flowchart of an alternative process to that of figure 2.

### DESCRIPTION OF A PREFERRED EMBODIMENT

According to the system of the invention a first subscriber (1) establishes communication with a second subscriber (2) over a line (3) of a first network (4), which can be a leased line or data transport network, or else a public switched telephone network (PSTN).

A second line (5) belonging to a second network (6) for data transport or for leased lines, or else a PSTN, other than that of the first network (4), serves as backup line in the event that a fault arises in the communication over the first line (3) for whatever reason. This second line (5) offers the characteristics of a conventional backup line.

In the practical embodiment of the invention, both subscribers (1) and (2) are connected to the network preferentially through a multi-service access node (7) and (8), respectively. Notwithstanding, it must be pointed out that other access multiplexing equipment can also be used for carrying out the invention.

In each one of said nodes (7) and (8) a mobile terminal (71) and (81), respectively, capable of establishing calls to predetermined numbers over a mobile network (9) is included.

The multi-service access nodes (7 and 8) are multiplexing equipments for user traffic (voice and data), capable of interchanging traffic over the leased lines or data network (4), over the conventional switching network (6) or over the mobile telephone network (9).

The multi-service access nodes (7 and 8) include the equipment necessary for multiplexing the information streams from the user equipments (1 and 2) and route them onto the telecommunication networks. This equipment is controlled by means of an internal controller (73 and 83), following the instructions given by an operator via an external management system (72 and 82).

The internal controllers (73 and 83), are constituted basically by computers in which are installed access network management programs designed specifically depending on the actual embodiment of the rest of the equipment. Likewise, the external management systems (72 and 82), also computer-based, are connected with the internal controllers in such a manner that a user can configure them and insert the instructions relative to control and management of the access nodes.

It is worth noting that in the case where other access multiplexing equipments are employed, these shall likewise be capable of interchanging traffic over the leased lines or data network (4), over the conventional switching network (6) or over the mobile telephone network (9); and they shall be fitted with internal controllers and external management systems, as has been described in the case of multi-service access nodes.

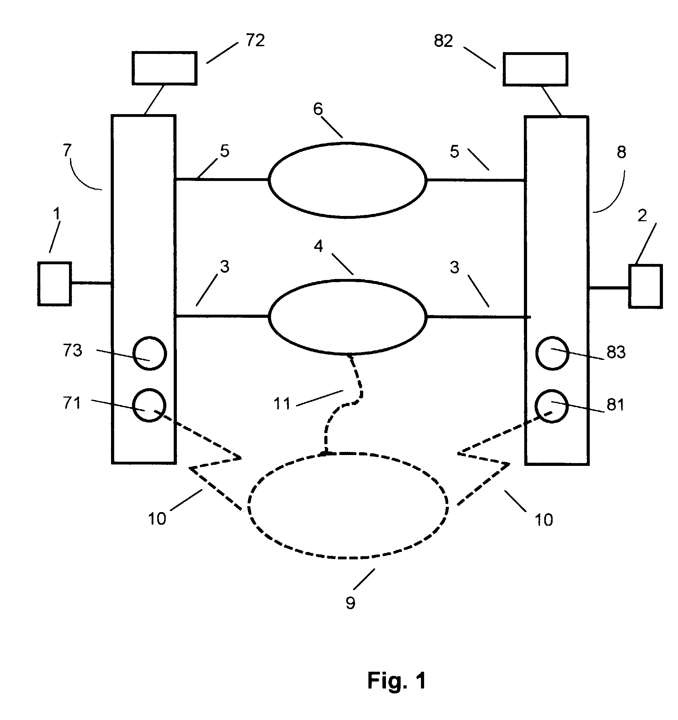

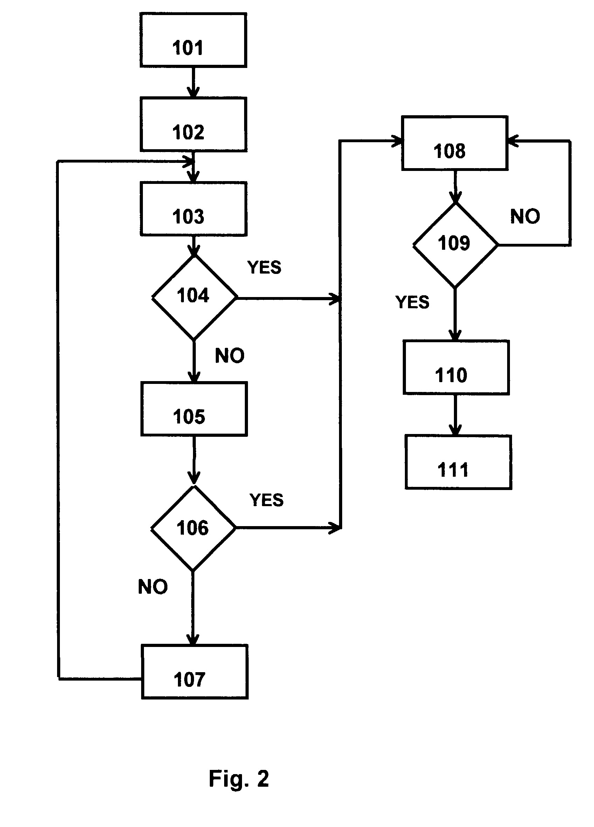

A description is now given of an example of the process followed by the multi-service access nodes for connecting the users over a radio backup line, with the support of figures 1 and 2 together.

In normal working (101), the connections between subscribers (1) and (2) are set up by means of commands issued by the management systems (72) and (82) corresponding to each multi-service node, over the first data network (4), or internally by the controllers (73) and (83) of the multi-service nodes, obeying commands from the subscriber terminals (signalling).

If, due to an accident, connection between the multi-service node (7) or (8) and the data network is lost, said fault is detected by means of the link quality supervision (102). The controller incorporated in the multi-service node (73) and (83), or the management system (72, 82) attempts to establish the communication over the conventional backup line (5) as is shown in step (103). Subsequently, a check is made to see if communication has been established (104). If the answer is affirmative, the backup mode is retained in operation (108), which is being implemented over the conventional backup line (5).

If it is not possible to set up communication over the conventional backup line (5), the controller sends a command to the mobile terminal (71, 81) for the latter to make a call to one or more predetermined numbers (105). Once connection has been made (106) in the call over the mobile network (9), said connection shall serve as backup communication line (10) between the first subscriber (1) and the second subscriber (2), the operation being retained in backup mode (108), this time over a mobile telephony line.

The internal controller (73 and 83) of each multi-service access node acts for rerouting the data streams over the radio backup line (10).

At the same time, a check is also made whether the communication line (3) has been repaired (109), the communication being retained over the radio backup line (10) until the repair has been completed.

Once the checking process (109) reveals the communication line (3) has been repaired (109), the connection is restored over the latter (110), and the backup call is released (111).

Returning to step (106) of the operation, it must be pointed out that if connection is not achieved with the call to the mobile network, the system optionally sets up an alarm call (107) to an operator, and the same operation starting from step (103) is repeated thereafter, that is, the call over the conventional backup line (5).

Advantageously, on carrying out the call through one of the mobile terminals, for example mobile terminal (71) in figure 1, a connection route is chosen between the two terminals that partly employs a fixed network (4, 6) for setting up the communication in optimum mode.

Thus, when a mobile terminal, for example terminal (71), makes a call, the connection with the mobile terminal (81) can be set up either by radio (10) over the entire path and directly to the multi-service access node (8), or else, if the span of line (3) which runs between the first network (4) and the access node (8) is not damaged, over connection (11) which is set up from the mobile network (9) to the fixed network (4), terminating in access node (8) via said span of the communication line (3) that has not been damaged.

The same operation could be performed by using the second network (6) together with the span of the conventional backup line (5) that remains undamaged.

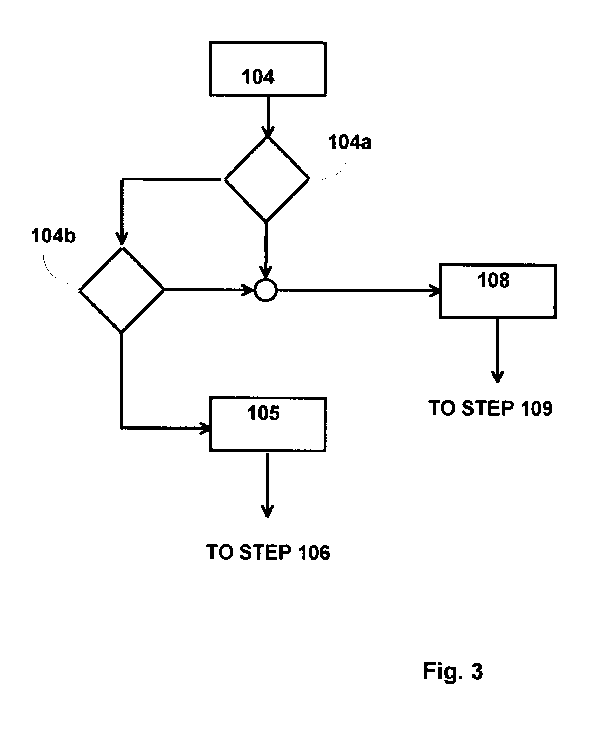

The process for carrying out this operation is shown in figure 3 in which, for reasons of simplification, only those steps which are particularly necessary for carrying out it are shown, the remaining steps being identical to those shown in figure 2.

In said figure 3 step (104) may be observed in which, just as was described with respect to figure 2, a check is made of whether the communication has been set up over a conventional backup line (5).

If communication over the conventional backup line (5) is not possible, the controller sends a command to the mobile terminal (71, 81) for the latter to make a call over the mobile network (9) to one or several predetermined numbers.

In the operation in question, the first predetermined number called (104a) would be a destination number belonging to the first fixed network (4) to which a call is made over the mobile network (9). If the connection is set up, operation will continue in backup mode (108). In the event of failure, a second call (104b) will be made to a predetermined number of the second fixed network (6), also by calling over the mobile network (9). If the connection is set up, operation will continue in backup mode (108). Finally, if the connection is not established, a number belonging to the mobile network (9) will be called as has been described for step (105) and those following in relation with figure 2.

## Claims

1. **System for implementing a backup line in a telecommunication network,** which comprises at least one communication line (3) in a telecommunication network (4) for establishing communication between a first subscriber (1) and at least a second subscriber (2), **characterised** in that each subscriber is connected to an access multiplexing equipment (7, 8) in which a mobile terminal (71, 81) capable of establishing calls by radio to predetermined numbers is included.

2. **System,** according to the preceding claim, **characterised** in that each access multiplexing equipment (7, 8) comprises at least one internal controller (73, 83), for following the instructions given by an operator through an external management system (72, 82), and for rerouting the data streams over a radio backup line (10).

3. **System,** according to any one of the preceding claims, **characterised** in that it comprises a second line (5) pertaining to a second network (6) different from the first network (4), that serves as backup line in the event of a failure occurring in the communication for any reason whatsoever in the first line (3).

4. System, according to any one of the preceding claims, **characterised** in that the access multiplexing equipments (7, 8) are multi-service access nodes.

5. **Method for implementing a backup line in a telecommunication network,** said network comprising at least one communication line (3) in a telecommunication network (4) for establishing communication between a first subscriber (1) and at least a second subscriber (2), **characterised** by comprising the steps of:
- detecting a fault in a connection in a communication line (3, 5) between the first subscriber (1) and at least a second subscriber (2) by means of a link quality supervision (102);
- making a call to one or several predetermined numbers (105) by radio from a mobile terminal (71, 81) to which the first subscriber (1) is connected; and
- upon establishing a line (10, 11) for connection (106) in said call between said first subscriber and at least a second subscriber, using said line (10, 11) as backup communication line.

6. **Method,** according to the preceding claim, **characterised** in that the communication is maintained over the radio backup line (10, 11), as long as a connection fault persists, the connection over the communication line (3) being restored once the fault has been cleared, and the line (10, 11) of the radio backup call is released (111).

7. **Method**, according to any one of the claims 5 or 6, **characterised** in that at least one predetermined number to which the call is made by one of the mobile terminals (71, 81) belongs to a fixed network (4, 6).

8. **Method,** according to any one of the claims 5 to 7, **characterised** in that in the event that the radio connection is not established, an alarm call (107) is made to an operator.
